# EUROPEAN PATENT APPLICATION

(11) **EP 2 835 343 A1**
(43) Date of publication of application: **11.02.2015**
(21) Application number: 13772684.0
(22) Date of filing: 04.04.2013
(51) Int. Cl.: C01B 3/38, H01M 8/06, H01M 8/10

(54) **HYDROGEN GENERATOR**

(30) Priority: 05.04.2012 JP 2012086125; 19.03.2013 JP 2013056335
(71) Applicant: Panasonic Intellectual Property Management Co., Ltd., Osaka-shi, Osaka 540-6207 (JP)
(72) Inventor: KIMURA, Yoichi, Chuo-ku Osaka 540-6207 (JP); FUKUDA, Masaru, Chuo-ku Osaka 540-6207 (JP); FUJIOKA, Hiroki, Chuo-ku Osaka 540-6207 (JP); MUKAI, Yuji, Chuo-ku Osaka 540-6207 (JP); YOSHIDA, Yutaka, Chuo-ku Osaka 540-6207 (JP); TAGUCHI, Kiyoshi, Chuo-ku Osaka 540-6207 (JP)
(74) Representative: Grünecker, Kinkeldey, Stockmair & Schwanhäusser
(86) International application number: PCT/JP2013/002342
(87) International publication number: WO 2013/150798

(57) **Abstract**

A hydrogen generation apparatus (1) is configured to be supplied with a raw material containing a hydrocarbon component and generate a hydrogen-containing fuel gas. The hydrogen generation apparatus (1) includes: a reformer (10) configured to cause a reforming reaction of a mixed gas of the raw material and steam; a combustor (2) configured to combust a combustible gas to heat the reformer (10); a hydrodesulfurizer (14) configured to be supplied with heat from the reformer (10), and cause a reaction between sulfur in the raw material that is to be supplied to the reformer (10) and hydrogen to remove the sulfur from the raw material; a first heat insulating material (13) disposed between the hydrodesulfurizer (14) and the reformer (10); and a heat equalizing plate (18) disposed between the hydrodesulfurizer (14) and the first heat insulating material (13).

## Description

### Technical Field

The present invention relates to fuel cell power generators configured to generate electric power by using, as a raw material, a hydrocarbon compound containing at least carbon (C) and hydrogen (H), and particularly to hydrogen generation apparatuses including a hydrodesulfurizer configured to remove sulfur compounds from the raw material.

### Background Art

Fuel cell power generators include: a fuel cell; a hydrogen generation apparatus configured to supply a hydrogen-containing fuel gas to the fuel cell; an inverter circuit configured to convert DC power generated by a power generation unit of the fuel cell into AC power; and a control device configured to control these components. There are various types of fuel cells, and currently, solid polymer fuel cells are gaining in popularity. A reformer is used in the hydrogen generation apparatus. Although there are several types of reformers available, currently, reformers of a steam reforming type, which generate hydrogen by causing a catalytic reaction at a high temperature between steam and a hydrocarbon compound serving as a raw material, are widely used since reformers of a steam reforming type are highly efficient.

It should be noted that city gas obtained from natural gas, LP gas, natural gas, gasoline, kerosene, methane, ethane, propane, butane, pentane, and other hydrocarbons (including a mixture of two or more kinds of hydrocarbons) may be used as the raw material. Alcohols such as methanol and/or ethers may be mixed into the raw material.

However, such a raw material contains sulfur compounds, which are either added to the raw material as odorants or originally contained in the raw material. These sulfur compounds poison a catalyst used in the reformer, thereby inhibiting the activity of the catalyst.

For this reason, it is necessary to remove the sulfur compounds from the raw material by means of a desulfurizer before the raw material is supplied to the reformer.

Currently, two types of desulfurizers are used, i.e., desulfurizers of an adsorption desulfurization type and desulfurizers of a hydrodesulfurization type. Adsorption desulfurization is performed such that the raw material is passed through the inside of an adsorption desulfurizer packed with an adsorbent capable of adsorbing sulfur compounds, and thereby the raw material is desulfurized. Since adsorption desulfurization is performed at a normal temperature, adsorption desulfurizers are very easy to handle, which is an advantage of adsorption desulfurizers.

Meanwhile, hydrodesulfurization has, for example, as disclosed in Patent Literature 1, the following advantages: since the sulfur content adsorbing capacity of an adsorbent used in hydrodesulfurization is greater than the sulfur content adsorbing capacity of an adsorbent used in adsorption desulfurization, it is not necessary to replace the adsorbent even after a long-term hydrodesulfurizer operation; and the desulfurization can be stably performed with a chemical reaction. However, in hydrodesulfurization, it is necessary to increase the temperature of a desulfurization catalyst for the following reason: in hydrodesulfurization, the raw material to which hydrogen is added is passed through a hydrodesulfurizer packed with a desulfurization catalyst whose temperature has been increased to, for example, 200 °C to 400 °C, so that sulfur compounds in the raw material are transformed into hydrogen sulfide, which is readily adsorbed by an adsorbent, and the hydrogen sulfide thus formed is removed by adsorption using the adsorbent. Therefore, the hydrodesulfurizer is disposed within or near a hydrogen generation apparatus, and the hydrodesulfurizer is heated to its operating temperature by heat from the hydrogen generation apparatus. For example, Patent Literature 1 discloses a technique in which: a heat insulating material layer is disposed around a portion of the outer periphery of a hydrogen generation apparatus, the portion corresponding to the position of a reformer in the hydrogen generation apparatus; and a hydrodesulfurizer is disposed around the outer periphery of the heat insulating material layer, and thereby the hydrodesulfurizer is heated and its temperature is increased.

### Citation List

### Patent Literature

PTL 1: Japanese Laid-Open Patent Application Publication No. 2010-058995

### Summary of Invention

### Technical Problem

Although it is necessary to increase the temperature of the hydrodesulfurizer as described above, if the hydrogenation temperature is excessively high, then thermal degradation of the desulfurization catalyst occurs. On the other hand, if the hydrogenation temperature is excessively low, the reaction is not caused smoothly, and as a result, the desulfurization catalyst is required in a large amount. A hydrogen generation apparatus loaded with a large amount of desulfurization catalyst has not only a large volumetric capacity but also a large thermal capacity. Accordingly, it takes time to increase the temperature of such a hydrogen generation apparatus, and the start-up time of the hydrogen generation apparatus becomes long. Therefore, it is necessary to reduce the desulfurization catalyst loading amount as much as possible. In order to do so, the temperature of the entire desulfurization catalyst needs to be maintained at a substantially uniform temperature that is close to the upper limit temperature. That is, in the case of the above-described example, a temperature difference in the entire desulfurization catalyst is maintained in the range of approximately 50 °C from 250 °C to 300 °C, or desitably maintained in the range of approximately 30 °C from 270 °C to 300 °C, if possible.

In the above-described conventional technique, a passage of a reformed gas, through which the reformed gas flows out of the reformer into a CO remover, is disposed around the outer periphery of a reforming catalyst in the reformer of the hydrogen generation apparatus, and the heat insulating layer is disposed around the outer periphery of the passage of the reformed gas. The hydrodesulfurizer is disposed around the outer periphery of the heat insulating layer.

The heat insulating layer does not fully block heat, but serves to transmit part of the reformer's heat from the reformed gas passage, through which passage the reformed gas flows out of the reformer into the CO remover, to the hydrodesulfurizer, thereby heating and increasing the temperature of the hydrodesulfurizer.

Meanwhile, the temperatures of the reformer and the CO remover of the hydrogen generation apparatus are maintained at suitable temperatures for the reactions. Accordingly, the hydrogen generation apparatus is designed such that the temperature of the reformed gas that flows out of the reformer is in the range of 600 °C to 700 °C, and the temperature of the reformed gas that flows into the CO remover is 300 °C or lower.

Therefore, the temperature of the reformed gas flowing through the passage from the reformer to the CO remover decreases from approximately 700 °C or higher to 300 °C or lower. That is, the hydrodesulfurizer is disposed around the passage having a temperature difference of approximately 400 °C, with the heat insulating layer in between the hydrodesulfurizer and the passage. As a result, the temperature of the desulfurization catalyst positioned near the high-temperature portion of the reformed gas passage at the reforming catalyst exit side becomes a high temperature. Meanwhile, the temperature of the desulfurization catalyst positioned near the low-temperature portion of the reformed gas passage at the CO remover's inlet side becomes a low temperature. Accordingly, the temperature of the entire desulfurization catalyst cannot be maintained at the aforementioned substantially uniform temperature, and thus there is a problem in that it is inevitable to increase the desulfurization catalyst loading amount.

The present invention solves the above-described conventional problems. The present invention provides a hydrogen generation apparatus capable of making the temperature of the entire desulfurization catalyst uniform and suitable with a simple configuration, thereby making it possible to minimize the desulfurization catalyst loading amount.

### Solution to Problem

In order to solve the above-described conventional problems, a hydrogen generation apparatus according to the present invention, which is configured to be supplied with a raw material containing a hydrocarbon component and generate a hydrogen-containing fuel gas, includes: a reformer configured to cause a reforming reaction of a mixed gas of the raw material and steam; a combustor configured to combust a combustible gas to heat the reformer; a hydrodesulfurizer configured to be supplied with heat from the reformer, and cause a reaction between sulfur in the raw material that is to be supplied to the reformer and hydrogen to remove the sulfur from the raw material; a first heat insulating material disposed between the hydrodesulfurizer and the reformer; and a heat equalizing plate disposed between the hydrodesulfurizer and the first heat insulating material.

Accordingly, at the time of heating and increasing the temperature of the hydrodesulfurizer by transmitting heat from the reformer to the hydrodesulfurizer, the heat to be transmitted to the hydrodesulfurizer via the first heat insulating material is received by the heat equalizing plate, and a temperature difference occurring between upstream and downstream portions of the reformer is reduced at the heat equalizing plate owing to the thermal conductivity of the heat equalizing plate. Then, the heat is transmitted to the hydrodesulfurizer. This makes it possible to make the temperature of the entire hydrodesulfurizer uniform. Moreover, since a temperature difference occurring between upper and lower portions of the hydrodesulfurizer can also be reduced owing to the thermal conductivity of the heat equalizing plate, the temperature of the entire hydrodesulfurizer can be made uniform.

The hydrogen generation apparatus may further include a second heat insulating material disposed outside the reformer and the hydrodesulfurizer. The hydrodesulfurizer may be formed outside the reformer. The heat equalizing plate may include: a first heat equalizing portion disposed between the hydrodesulfurizer and the first heat insulating material; and a second heat equalizing portion disposed between the hydrodesulfurizer and the second heat insulating material, the second heat equalizing portion exchanging heat with the first heat equalizing portion.

Accordingly, at the time of heating and increasing the temperature of the hydrodesulfurizer by transmitting heat from the reformer to the hydrodesulfurizer, heat received by the first heat equalizing portion of the heat equalizer is transmitted to the second heat equalizing portion by heat exchange, and thereby the heat is transmitted to the hydrodesulfurizer from the outside of the hydrodesulfurizer. This makes it possible to make the inner and outer temperatures of the hydrodesulfurizer uniform.

The heat equalizing plate may further include a third heat equalizing portion disposed between the reformer and the first heat insulating material.

Accordingly, at the time of heating and increasing the temperature of the hydrodesulfurizer by transmitting heat from the reformer to the hydrodesulfurizer, the heat is received also by the third heat equalizing portion of the heat equalizer. As a result, the uniformity of the inner and outer temperatures of the hydrodesulfurizer is further increased.

The hydrogen generation apparatus may further include a cooling passage through which a coolant flows, the cooling passage being disposed in contact with the heat equalizing plate and serving to cool down the heat equalizing plate.

With the above configuration, the heat equalizing plate is cooled down by the cooling passage. Accordingly, heat whose temperature has been adjusted is transmitted to the hydrodesulfurizer. As a result, the temperature of the entire hydrodesulfurizer can be made suitable.

The hydrogen generation apparatus according to the present invention may further include a flue gas passage through which a flue gas discharged from the combustor flows, the flue gas passage serving to heat the reformer. The cooling passage may be configured to cool down a portion of the heat equalizing plate, the portion corresponding to an upstream side of the flue gas passage.

This configuration further facilitates eliminating non-uniformity of heat distribution in the heat insulating material. Consequently, the uniformity of the temperature of the hydrodesulfurizer can be further increased. Specifically, the temperature of the reformer at its portion corresponding to the upstream side of the flue gas passage is higher than the temperature of the reformer at its portion corresponding to the downstream side of the flue gas passage. Accordingly, the temperatures of the heat insulating material and the heat equalizing plate at their portions corresponding to the upstream side of the flue gas passage are higher than the temperatures of the heat instaling material and the heat equalizing plate at their portions corresponding to the downstream side of the flue gas passage. As a result, the temperature of the hydrodesulfurizer at its portion corresponding to the upstream side of the flue gas passage is higher than the temperature of the hydrodesulfurizer at its portion corresponding to the downstream side of the flue gas passage. Even though heat distribution is non-uniform in the surface direction of the heat equalizing plate, the uniformity of the temperature of the heat equalizing plate can be increased by configuring the cooling passage so as to cool down a portion of the heat equalizing plate, the portion corresponding to the upstream side of the flue gas passage.

### Advantageous Effects of Invention

With use of the technology according to the present invention, at the time of heating and increasing the temperature of the hydrodesulfurizer by transmitting heat from the reformer to the hydrodesulfurizer, since the heat is made uniform by means of the heat equalizing plate and transmitted to the hydrodesulfurizer in a dispersed manner, the temperature of the entire hydrodesulfurizer can be made uniform although a temperature difference occurring between upstream and downstream portions of the reformer causes non-uniformity of heat distribution in the heat insulating material.

Thus, the temperature of the entire hydrodesulfurizer can be made uniform and suitable with a simple configuration. This makes it possible to minimize the desulfurization catalyst loading amount, and obtain a compact and low-cost hydrogen generation apparatus.

The above object, other objects, features, and advantages of the present invention will be made clear by the following detailed description of preferred embodiments with reference to the accompanying drawings.

### Brief Description of Drawings

[Fig. 1] Fig. 1 is a block diagram showing a hydrogen generation apparatus according to Embodiment 1 of the present invention.
[Fig. 2] Fig. 2 shows a schematic configuration of a hydrogen generation apparatus according to Embodiment 2 of the present invention.
[Fig. 3] Fig. 3 shows a schematic configuration of a hydrogen generation apparatus according to Embodiment 3 of the present invention.
[Fig. 4] Fig. 4 shows a schematic configuration of a hydrogen generation apparatus according to a variation of Embodiment 3 of the present invention.
[Fig. 5] Fig. 5 shows a schematic configuration of a hydrogen generation apparatus according to Embodiment 4 of the present invention.
[Fig. 6] Fig. 6 shows a schematic configuration of a hydrogen generation apparatus according to Embodiment 5 of the present invention.

### Description of Embodiments

A hydrogen generation apparatus according to a first aspect of the present invention, which is configured to be supplied with a raw material containing a hydrocarbon component and generate a hydrogen-containing fuel gas, includes: a reformer configured to cause a reforming reaction of a mixed gas of the raw material and steam; a combustor configured to combust a combustible gas to heat the reformer; a hydrodesulfurizer configured to be supplied with heat from the reformer, and cause a reaction between sulfur in the raw material that is to be supplied to the reformer and hydrogen to remove the sulfur from the raw material; a first heat insulating material disposed between the hydrodesulfurizer and the reformer; and a heat equalizing plate disposed between the hydrodesulfurizer and the first heat insulating material.

Accordingly, at the time of heating and increasing the temperature of the hydrodesulfurizer by transmitting heat from the reformer to the hydrodesulfurizer, the heat to be transmitted to the hydrodesulfurizer via the first heat insulating material is received by the heat equalizing plate, and a temperature difference occurring between upstream and downstream portions of the reformer is reduced at the heat equalizing plate owing to the thermal conductivity of the heat equalizing plate. Then, the heat is transmitted to the hydrodesulfurizer. This makes it possible to make the temperature of the entire hydrodesulfurizer uniform. Moreover, since a temperature difference occurring between upper and lower portions of the hydrodesulfurizer can also be reduced owing to the thermal conductivity of the heat equalizing plate, the temperature of the entire hydrodesulfurizer can be made uniform.

According to a second aspect of the present invention, the hydrogen generation apparatus may further include a second heat insulating material disposed outside the reformer and the hydrodesulfurizer. The hydrodesulfurizer may be formed outside the reformer. The heat equalizing plate may include: a first heat equalizing portion disposed between the hydrodesulfurizer and the first heat insulating material; and a second heat equalizing portion disposed between the hydrodesulfurizer and the second heat insulating material, the second heat equalizing portion exchanging heat with the first heat equalizing portion.

Accordingly, at the time of heating and increasing the temperature of the hydrodesulfurizer by transmitting heat from the reformer to the hydrodesulfurizer, heat received by the first heat equalizing portion of the heat equalizing plate is transmitted to the second heat equalizing portion by heat exchange, and thereby the heat is transmitted to the hydrodesulfurizer from the outside of the hydrodesulfurizer. This makes it possible to make the inner and outer temperatures of the hydrodesulfurizer uniform.

In the hydrogen generation apparatus according to a third aspect of the present invention, the heat equalizing plate may further include a third heat equalizing portion disposed between the reformer and the first heat insulating material.

Accordingly, at the time of heating and increasing the temperature of the hydrodesulfurizer by transmitting heat from the reformer to the hydrodesulfurizer, the heat is received also by the third heat equalizing portion of the heat equalizer. As a result, the uniformity of the inner and outer temperatures of the hydrodesulfurizer is further increased.

According to a fourth aspect of the present invention, the hydrogen generation apparatus may further include a cooling passage through which a coolant flows, the cooling passage being disposed in contact with the heat equalizing plate and serving to cool down the heat equalizing plate.

With the above configuration, the heat equalizing plate is cooled down by the cooling passage. Accordingly, heat whose temperature has been adjusted is transmitted to the hydrodesulfurizer. As a result, the temperature of the entire hydrodesulfurizer can be made suitable.

According to a fifth aspect of the present invention, the hydrogen generation apparatus further includes a flue gas passage through which a flue gas discharged from the combustor flows, the flue gas passage serving to heat the reformer. The cooling passage is configured to cool down a portion of the heat equalizing plate, the portion corresponding to an upstream side of the flue gas passage.

This configuration further facilitates eliminating non-uniformity of heat distribution in the heat insulating material. Consequently, the uniformity of the temperature of the hydrodesulfurizer can be further increased. Specifically, the temperature of the reformer at its portion corresponding to the upstream side of the flue gas passage is higher than the temperature of the reformer at its portion corresponding to the downstream side of the flue gas passage. Accordingly, the temperatures of the heat insulating material and the heat equalizing plate at their portions corresponding to the upstream side of the flue gas passage are higher than the temperatures of the heat insulating layer and the heat equalizing plate at their portions corresponding to the downstream side of the flue gas passage. As a result, the temperature of the hydrodesulfurizer at its portion corresponding to the upstream side of the flue gas passage is higher than the temperature of the hydrodesulfurizer at its portion corresponding to the downstream side of the flue gas passage. Even though heat distribution is non-uniform in the surface direction of the heat equalizing plate, the uniformity of the temperature of the heat equalizing plate can be increased by configuring the cooling passage so as to cool down a portion of the heat equalizing plate, the portion corresponding to the upstream side of the flue gas passage.

### (Embodiment 1)

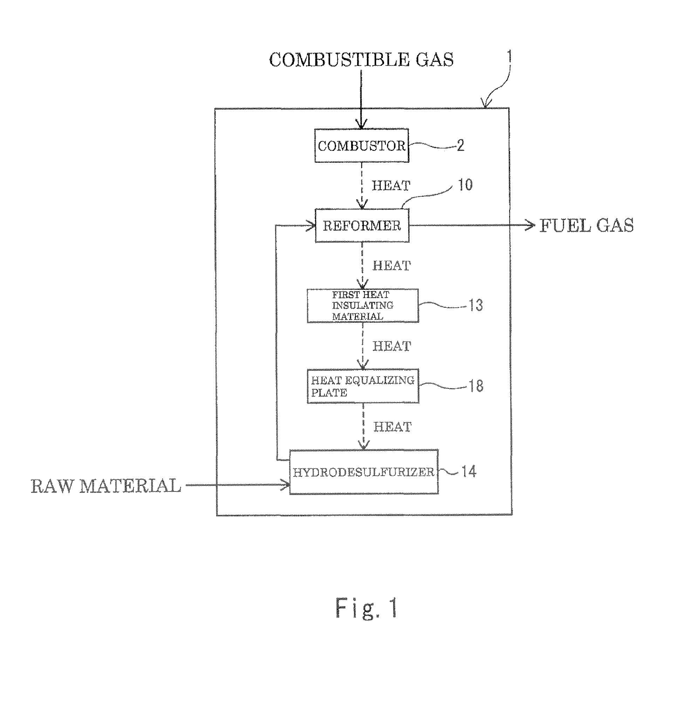

Fig. 1 is a block diagram showing a hydrogen generation apparatus 1 according to Embodiment 1 of the present invention. As shown in Fig. 1, the hydrogen generation apparatus 1 is configured to be supplied with a raw material containing a hydrocarbon component and generate a hydrogen-containing fuel gas. The hydrogen generation apparatus 1 includes: a reformer 10 configured to cause a reforming reaction of a mixed gas of the raw material and steam; a combustor 2 configured to combust a combustible gas to heat the reformer 10; a hydrodesulfurizer 14 configured to be supplied with heat from the reformer 10, and cause a reaction between sulfur in the raw material that is to be supplied to the reformer 10 and hydrogen to remove the sulfur from the raw material; a first heat insulating material 13 disposed between the hydrodesulfurizer 14 and the reformer 10; and a heat equalizing plate 18 disposed between the hydrodesulfurizer 14 and the first heat insulating material 13. Dashed lines in Fig. 1 indicate a flow of heat in the hydrogen generation apparatus 1.

The hydrogen generation apparatus to which Embodiment 1 is applicable is not limited to a particular type of hydrogen generation apparatus, so long as the hydrogen generation apparatus is configured such that the hydrodesulfurizer 14 is supplied with heat from the reformer 10. Thus, (Embodiment 1 is applicable to various types of hydrogen generation apparatuses.

According to the hydrogen generation apparatus 1 of Embodiment 1 with the above-described configuration, at the time of heating and increasing the temperature of the hydrodesulfurizer 14 by transmitting heat from the reformer 10 to the hydrodesulfurizer 14, the heat to be transmitted to the hydrodesulfurizer 14 via the first heat insulating material 13 is received by the heat equalizing plate 18, and a temperature difference occurring between upstream and downstream portions of the reformer is reduced at the heat equalizing plate 18 owing to the thermal conductivity of the heat equalizing plate 18. Then, the heat is transmitted to the hydrodesulfurizer 14. This makes it possible to make the temperature of the entire hydrodesulfurizer 14 uniform. Moreover, since a temperature difference occurring between upper and lower portions of the hydrodesulfurizer 14 can also be reduced owing to the thermal conductivity of the heat equalizing plate 18, the temperature of the entire hydrodesulfurizer 14 can be made uniform.

### (Embodiment 2)

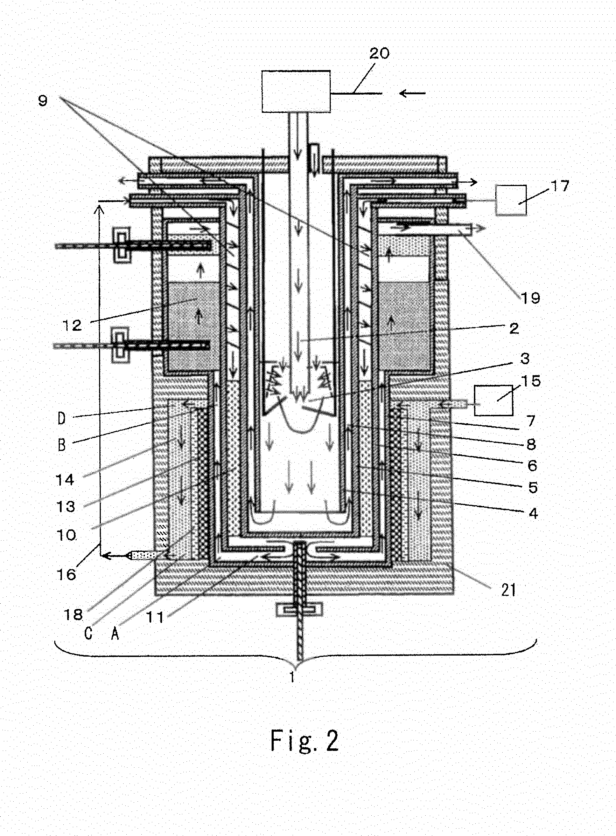

Fig. 2 shows a schematic configuration of the hydrogen generation apparatus 1 according to Embodiment 2 of the present invention.

The hydrogen generation apparatus according to Embodiment 2 serves as a specific example of the hydrogen generation apparatus according to Embodiment 1.

As shown in Fig. 2, the combustor 2 is disposed on the central axis of the hydrogen generation apparatus 1. A burner 3 configured to form a flame downward is provided at the center of the combustor 2.

The hydrogen generation apparatus 1 is in the form of multiple concentric pipes, such that a combustion cylinder 4, an inside-inner cylinder 5, an inner cylinder 6, and an outer cylinder 7 are arranged sequentially from the innermost side.

The burner 3 is configured to release a combustion gas inside the combustion cylinder 4. Annular space formed between the combustion cylinder 4 and the inside-inner cylinder 5 serves as a combustion gas passage 8.

A reforming water evaporator 9 is provided in part of annular space between the inside-inner cylinder 5 and the inner cylinder 6. In the reforming water evaporator 9, a water passage defining part is formed in such a manner as to circumferentially and spirally extend around the outer surface of the inner cylinder.

Downstream from the reforming water evaporator 9, the reformer 10 is provided in annular space between the inner cylinder 6 and the outer cylinder 7. The reformer 10 is packed with a reforming catalyst formed of a noble metal such as Pt, Ru, or Rh, or a base metal such as Ni. The reformer 10 is heated by utilizing heat from the combustion gas, and generates a CO-containing reformed gas with a high hydrogen concentration through a steam reforming reaction between the raw material and steam.

Downstream from the reformer 10, a turning passage 11 for the reformed gas is provided in annular space between the inside-inner cylinder 5 and the inner cylinder 6. Downstream from the turning passage 11, a CO remover 12 is provided in annular space between the inner cylinder 6 and the outer cylinder 7. The CO remover 12 is packed with a CO removal catalyst which is, for example, a noble metal catalyst such as Pt, or a Fe-Cr catalyst, or a Cu-Zn catalyst. The CO remover 12 removes CO from the reformed gas supplied thereto by causing, for example, a shift reaction and/or a selective oxidation reaction using supplied oxygen.

The first heat insulating material 13 is disposed around the outer periphery of the reformed gas turning passage 11. The first heat insulating material 13 is formed of silica or glass cloth, for example. The hydrodesulfurizer 14 is provided in annular space formed around the outer periphery of the first heat insulating material 13. The annular space has a double-pipe shape. The hydrodesulfurizer 14 is packed with a desulfurization catalyst. The desulfurization catalyst may be formed as a single catalyst whose main component is, for example, Cu-Zn, Co-Mo, or ZnO, or may be formed as a combination of catalysts whose components are, for example, Cu-Zn, Co-Mo, and ZnO. The hydrodesulfurizer 14 reacts with hydrogen, thereby chemisorbing sulfur compounds contained in the raw material.

The hydrodesulfurizer 14 is provided with a raw material supply device 15 and a raw material pipe 16. The raw material supply device 15 supplies the raw material to the hydrodesulfurizer 14. The raw material is, after being desulfurized by the hydrodesulfurizer 14, supplied to the reforming water evaporator 9 through the raw material pipe 16.

The reforming water evaporator 9 is provided with a reforming water supply device 17 configured to supply reforming water. The heat equalizing plate 18 is disposed between the hydrodesulfurizer 14 and the first heat insulating material 13. Preferably, the heat equalizing plate 18 is formed of, for example, a material with higher thermal conductivity than the thermal conductivity of the heat insulating layer. It is particularly preferred that the heat equalizing plate 18 be formed of a metal such as copper, brass, or aluminum. The heat equalizing plate 18 may be formed of a single metal plate or a plurality of metal plates.

A reformed gas pipe 19 is provided downstream from the CO remover 12. The reformed gas pipe 19 is connected to a power generation unit of a fuel cell. Through the reformed gas pipe 19, a fuel gas is supplied to the fuel cell. Further, there is provided an off gas pipe 20 so that the fuel gas that has not been consumed by the power generation unit of the fuel cell can be supplied to the burner 3 as a combustible gas. A second heat insulating material 21 is disposed outside the reformer 10 and the hydrodesulfurizer 14.

Next, functions of a fuel cell system according to the present invention are described.

The raw material that has been supplied from the raw material supply device 15 to the hydrodesulfurizer 14 is desulfurized by the desulfurization catalyst, and is then supplied to the reforming water evaporator 9 through the raw material pipe 16. In the reforming water evaporator 9, the raw material is mixed and heated with reforming water supplied from the reforming water supply device 17, and is then supplied to the reformer 10. In the reformer 10, a steam reforming reaction occurs, and thereby a reformed gas is generated, which contains hydrogen, carbon dioxide, and carbon monoxide.

The reformed gas flows through the turning passage 11 into the CO remover 12, in which the carbon monoxide concentration of the reformed gas is reduced by a shift reaction and/or a selective oxidation reaction. Then, the reformed gas is supplied to the power generation unit of the fuel cell through the reformed gas pipe 19, and is used for generating electric power.

The reformed gas that has not been consumed for the power generation by the fuel cell, i.e., reformed off gas, returns to the burner 3 through the off gas pipe 20, and is utilized as a source of heat for heating the hydrogen generation apparatus 1.

The burner 3 combusts a combustible gas, which is either the reformed off gas returning from the fuel cell and supplied from the off gas pipe 20 or the raw material and reformed gas having flowed through the reformer 10 and supplied from the reformed gas pipe 19. Then, the burner 3 discharges a resultant high-temperature combustion gas to the combustion cylinder 4. Heat from the combustion gas flowing through the combustion gas passage 8 is transmitted to the reforming water evaporator 9 and the reformer 10, and the temperatures of the reformer 10 and the CO remover 12 of the hydrogen generation apparatus 1 are maintained at suitable temperatures for the reactions.

Accordingly, the downstream portion of the reformer 10 is heated to a high temperature of 600 °C to 700 °C. Therefore, the reformed gas flowing out of the reformer 10 is in a high-temperature state of 600 °C to 700 °C. Such a high-temperature reformed gas flows through the turning passage 11.

Meanwhile, since the operating temperature of the CO remover 12 is in the range of 200 °C to 300 °C, the reformed gas gives the internal heat of the turning passage 11 to the reformer 10, and is also cooled down by radiating heat to the outer cylinder 7 side of the turning passage 11.

Since the heat of the reformed gas flowing through the turning passage 11 is transmitted to the hydrodesulfurizer 14, the hydrodesulfurizer 14 is heated and the temperature of the hydrodesulfurizer 14 is increased. Thus, the temperature of the hydrodesulfurizer 14 depends on the temperature of the turning passage 11.

Hereinafter, functions of the hydrodesulfurizer 14 and the heat equalizing plate 18 with the above-described configuration are described.

When the hydrogen generation apparatus 1 shown in Fig. 2 is in operation, for example, the temperature of a point A is approximately 650 °C and the temperature of a point B is approximately 400 °C in the turning passage 11 shown in Fig. 2. Thus, in the turning passage 11, a temperature difference of approximately 250 °C occurs in the central axial direction. This temperature difference has an effect in a case where the first heat insulating material 13 serves as cushioning and transmits heat to the hydrodesulfurizer 14. Accordingly, in the case where the heat equalizing plate 18 is not provided between the first heat insulating material 13 and the hydrodesulfurizer 14, the temperature of a point C in the hydrodesulfurizer 14, which faces the turning passage 11 with the first heat insulating material 13 in between, becomes approximately 350 °C, and the temperature of a point D in the hydrodesulfurizer 14 becomes approximately 250 °C. Thus, in this case, a temperature difference of approximately 100 °C occurs in the central axial direction in the hydrodesulfurizer 14.

In the hydrogen generation apparatus 1, such a temperature difference becomes prominent not only in the central axial direction but also in the circumferential direction of the hydrodesulfurizer 14.

In view of the above, in the present invention, the heat equalizing plate 18 is disposed between the first heat insulating material 13 and the hydrodesulfurizer 14. Since the heat equalizing plate 18 is formed of a material with high thermal conductivity such as copper, brass, or aluminium, the heat equalizing plate 18 serves to reduce the temperature difference.

With the above configuration, at the time of heating and increasing the temperature of the hydrodesulfurizer 14 by transmitting the heat of the hydrogen generation apparatus 1 to the hydrodesulfurizer 14, heat with a temperature difference outside the first heat insulating material 13 can be received by the heat equalizing plate 18 and made uniform.

Then, the heat is transmitted to the hydrodesulfurizer 14. As a result, for example, the temperature at the point C is reduced to approximately 300 °C, and the temperature at the point D is reduced to approximately 270 °C. Thus, in the hydrodesulfurizer 14, the temperature difference in the central axial direction can be reduced to approximately 30 °C.

In the above-described manner, the temperature of the entire hydrodesulfurizer 14 can be made uniform, which makes it possible to minimize the desulfurization catalyst loading amount and realize a compact and low-cost hydrogen generation apparatus 1.

### (Embodiment 3)

Next, a hydrogen generation apparatus according to (Embodiment 3 of the present invention is described.

The hydrogen generation apparatus according to Embodiment 3 is configured in a similar manner to that described in Embodiment 2 shown in Fig. 2, and generates hydrogen by performing the same operations as those performed in Embodiment 2.

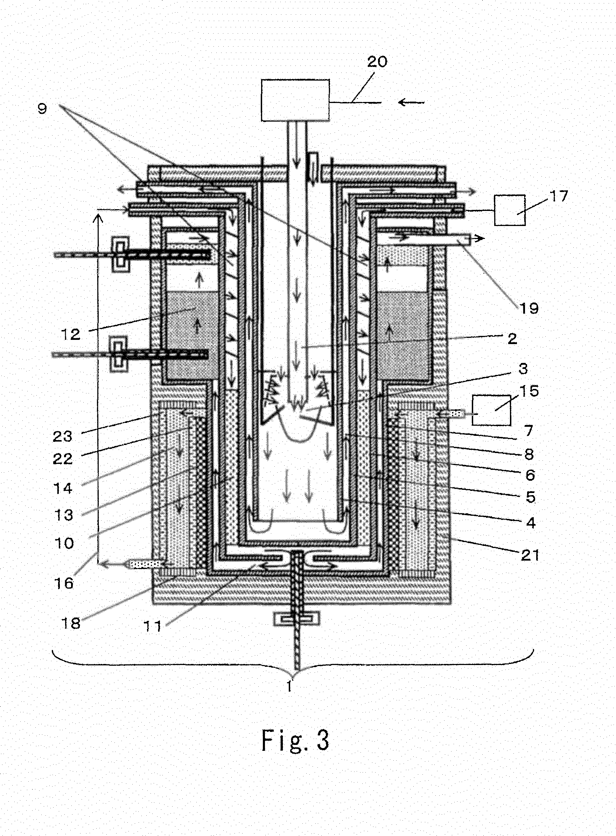

Fig. 3 shows a schematic configuration of the hydrogen generation apparatus according to Embodiment 3 of the present invention.

It should be noted that, in Fig. 3, the same components as those of Embodiment 2 are denoted by the same reference numerals as those used in Embodiment 2. Differences between Embodiment 3 shown in Fig. 3 and Embodiment I shown in Fig. 2 are as follows: in Embodiment 3, the heat equalizing plate 18 includes a first heat equalizing portion 22 disposed between the hydrodesulfurizer 14 and the first heat insulating material 13 and a second heat equalizing portion 23 disposed between the hydrodesulfurizer 14 and the second heat insulating material 21 ; and the first heat equalizing portion 22 and the second heat equalizing portion 23 exchange heat with each other.

In Embodiment 3, at the upper and lower portions of the hydrodesulfurizer 14 in the central axial direction, the first heat equalizing portion 22 and the second heat equalizing portion 23 are connected to each other.

Accordingly, at the time of heating and increasing the temperature of the hydrodesulfurizer 14 by transmitting the heat of the hydrogen generation apparatus 1 to the hydrodesulfurizer 14, heat received by the first heat equalizing portion 22 of the heat equalizing plate 18 is transmitted to the second heat equalizing portion 23 by heat exchange, and thereby the heat is transmitted to the hydrodesulfurizer 14 from the outside of the hydrodesulfurizer 14. This makes it possible to make the inner and outer temperatures of the hydrodesulfurizer 14 uniform.

As a result, the temperature of the entire hydrodesulfurizer 14 can be made uniform, which makes it possible to minimize the desulfurization catalyst loading amount and realize a compact and low-cost hydrogen generation apparatus 1.

In Embodiment 3, the heat equalizing plate 18 includes the first heat equalizing portion 22 disposed between the hydrodesulfurizer 14 and the first heat insulating material 13 and the second heat equalizing portion 23 disposed between the hydrodesulfurizer 14 and the second heat insulating material 21. However, the present embodiment is not limited to this.

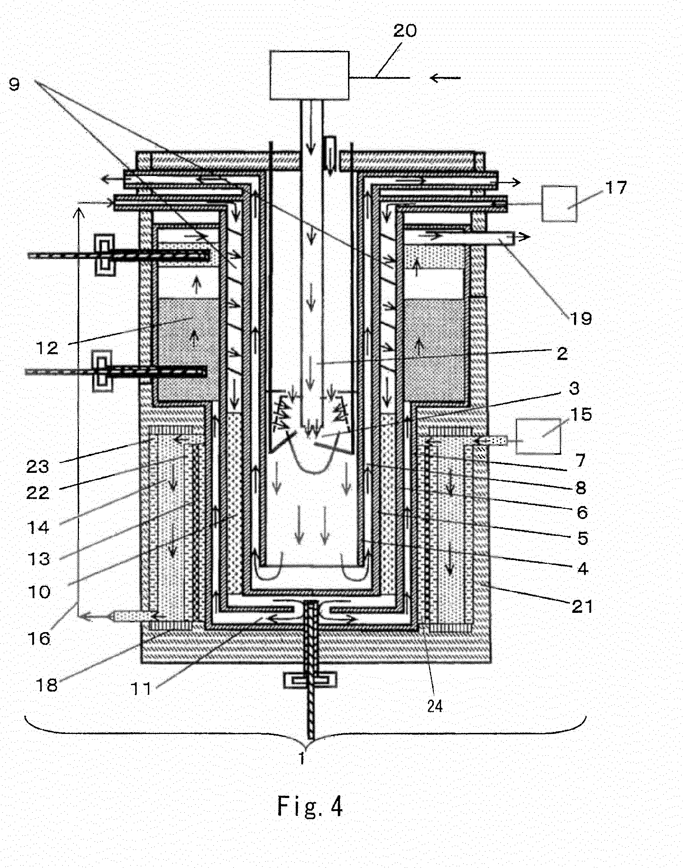

Fig. 4 shows a schematic configuration of hydrogen generation apparatus according to one variation of Embodiment 3 of the present invention. As shown in Fig. 4, the heat equalizing plate 18 may further include a third heat equalizing portion 24 disposed between the reformer 10 and the first heat insulating material 13. Accordingly, at the time of heating and increasing the temperature of the hydrodesulfurizer 14 by transmitting heat from the reformer to the hydrodesulfurizer 14, the heat is received also by the third heat equalizing portion 24 of the heat equalizing plate 18. As a result, the uniformity the inner and outer temperatures of the hydrodesulfurizer 14 is further increased. In a case where the first heat equalizing plate 18 is formed of a plurality of metal plates, the first heat equalizing portion 22, the second heat equalizing portion 23, and the third heat equalizing portion 24 may be formed of separate metal plates, respectively.

### (Embodiment 4)

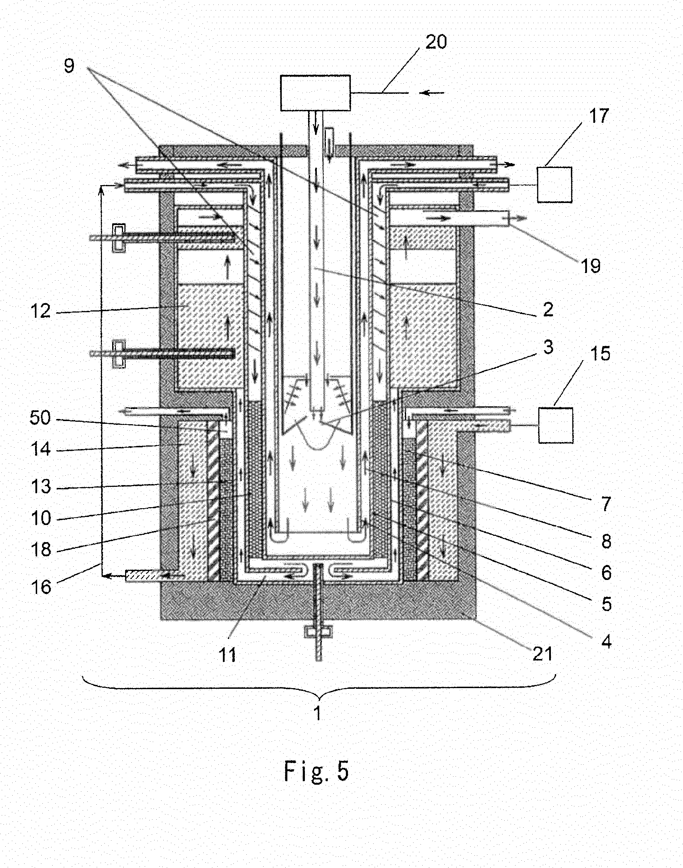

Next, a hydrogen generation apparatus according to Embodiment 4 of the present invention is described. Fig. 5 shows a schematic configuration of the hydrogen generation apparatus according to Embodiment 4 of the present invention. It should be noted that, in Fig. 5, the same components as those of the above-described embodiments are denoted by the same reference numerals as those used in the above-described embodiments. Embodiment 4 shown in Fig. 5 is different from Embodiment 2 shown in Fig. 2 in that, in Embodiment 4, a cooling passage 50, through which a coolant flows and which serves to cool down the heat equalizing plate 18, is disposed in contact with the heat equalizing plate 18.

With the above configuration, the heat equalizing plate 18 is cooled down by the cooling passage 50. Accordingly, heat whose temperature has been adjusted is transmitted to the hydrodesulfurizer 14. As a result, not only are the advantageous effects of Embodiment 2 exerted, but also the suitability of the temperature of the entire hydrodesulfurizer 14 can be improved.

It should be noted that, in Embodiment 4, piping for supplying and discharging the coolant to and from the cooling passage 50 is connected to the side of the body of the hydrogen generation apparatus 1. Such a configuration facilitates piping work inside the hydrogen generation apparatus 1.

### (Embodiment 5)

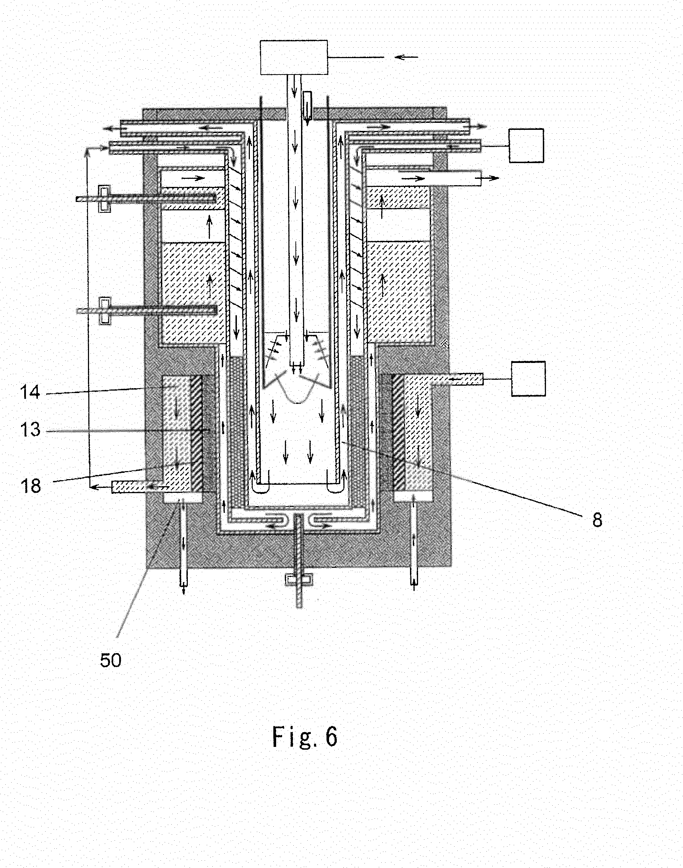

Next, a hydrogen generation apparatus according to Embodiment 5 of the present invention is described. Fig. 6 shows a schematic configuration of the hydrogen generation apparatus according to Embodiment 5 of the present invention. It should be noted that, in Fig. 6, the same components as those of Embodiment 4 are denoted by the same reference numerals as those used in (Embodiment 4. Embodiment 5 shown in Fig. 6 is different from Embodiment 4 shown in Fig. 5 in that, in Embodiment 5, the cooling passage 50 is configured to cool down a portion of the heat equalizing plate 18, the portion corresponding to the upstream side of the combustion gas passage 8.

Accordingly, a high-temperature portion of the hydrogen generation apparatus 1 can be efficiently cooled down by the cooling passage 50. As a result, the uniformity of the temperature of the hydrodesulfurizer 14 can be increased even compared to Embodiment 4.

It should be noted that, in the above-described embodiments, descriptions are given on the assumption that the hydrodesulfurizer 14, the heat equalizing plate 18, and the first heat insulating material 13 are annular and the reformer 10 is cylindrical. However, it is clearly understood that even if the hydrodesulfurizer 14 and the reformer 10 are plate-shaped, or the hydrodesulfurizer 14 and the reformer 10 are integrated as a module, the same advantageous effects can be obtained, and such configurational changes do not depart from the scope of the present invention.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

### Industrial Applicability

The hydrogen generation apparatus according to the present invention is capable of reducing the temperature distribution in the entire hydrodesulfurization agent, thereby making it possible to minimize the usage of the hydrodesulfurization agent.

### Reference Signs List

- 1: hydrogen generation apparatus
- 2: combustor
- 3: burner
- 4: combustion cylinder
- 5: inside-inner cylinder
- 6: inner cylinder
- 7: outer cylinder
- 8: combustion gas passage
- 9: reforming water evaporator
- 10: reformer
- 11: turning passage
- 12: CO remover
- 13: first heat insulating material
- 14: hydrodesulfurizer
- 15: raw material supply device
- 16: raw material pipe
- 17: reforming water supply device
- 18: heat equalizing plate
- 19: reformed gas pipe
- 20: off gas pipe
- 21: second heat insulating material
- 50: cooling passage

## Claims

1. A hydrogen generation apparatus configured to be supplied with a raw material containing a hydrocarbon component and generate a hydrogen-containing fuel gas, the hydrogen generation apparatus comprising:
a reformer configured to cause a reforming reaction of a mixed gas of the raw material and steam;
a combustor configured to combust a combustible gas to heat the reformer;
a hydrodesulfurizer configured to be supplied with heat from the reformer, and cause a reaction between sulfur in the raw material that is to be supplied to the reformer and hydrogen to remove the sulfur from the raw material,
a first heat insulating material disposed between the hydrodesulfurizer and the reformer; and
a heat equalizing plate disposed between the hydrodesulfurizer and the first heat insulating material.

2. The hydrogen generation apparatus according to claim 1, further comprising a second heat insulating material disposed outside the reformer and the hydrodesulfurizer, wherein
the hydrodesulfurizer is formed outside the reformer, and
the heat equalizing plate includes:
a first heat equalizing portion disposed between the hydrodesulfurizer and the first heat insulating material; and
a second heat equalizing portion disposed between the hydrodesulfurizer and the second heat insulating material, the second heat equalizing portion exchanging heat with the first heat equalizing portion.

3. The hydrogen generation apparatus according to claim 2, wherein the heat equalizing plate further includes a third heat equalizing portion disposed between the reformer and the first heat insulating material.

4. The hydrogen generation apparatus according to any one of claims 1 to 3, further comprising a cooling passage through which a coolant flows, the cooling passage being disposed in contact with the heat equalizing plate and serving to cool down the heat equalizing plate.

5. The hydrogen generation apparatus according to claim 4, further comprising a flue gas passage through which a flue gas discharged from the combustor flows, the flue gas passage serving to heat the reformer, wherein
the cooling passage is configured to cool down a portion of the heat equalizing plate, the portion corresponding to an upstream side of the flue gas passage.
